# EUROPEAN PATENT APPLICATION

(11) **EP 1 990 601 A1**
(43) Date of publication of application: **12.11.2008**
(21) Application number: 06841771.6
(22) Date of filing: 28.12.2006
(51) Int. Cl.: G01B 3/10

(54) **IMPROVED CATCH FOR FLEXOMETER**

(30) Priority: 01.03.2006 ES 200600456 U
(71) Applicant: MEDID INTERNACIONAL, S.A., 08003 Barcelona (ES)
(72) Inventor: CARREÑO SARRIAS, Jose, E-08003 Barcelona (ES)
(74) Representative: Morgades y Manonelles, Juan Antonio
(86) International application number: PCT/ES2006/000719
(87) International publication number: WO 2007/099180

(57) **Abstract**

The invention refers to the innovative design of a tab on one end of a flexometer, which includes a channelled steel strip bearing the relevant divisions, which, by using a helicoidal spring, rolls up inside a casing. The innovative nature of the invention rests in the fact the tab which acts as a stopper for the strip contrary to tabs which may be considered to be the current state of the art, covers both the upper and lower sides of the end of the tape and is made from one single piece. The material from which it has been made is transparent plastic or similar material with another important feature in that it does not prevent the correct reading of the tape in the area where both pieces are in contact with each other.

## Description

The invention refers to the innovative design of a tab on one end of a pocket tape measure, commonly known as a flexometer, which includes a channelled steel strip bearing the relevant divisions, which, by using a helicoidal spring, rolls up inside a casing. The innovative nature of this invention rests in the fact the tab which acts as a stopper for the strip contrary to tabs which may be considered to be the current state of the art, covers both the upper and lower sides of the end of the tape and is made from one single piece. The particular nature of the invention is that the material from which it has been made is transparent plastic or similar material with another important feature in that it does not prevent the correct reading of the tape in the area where both pieces are in contact with each other.

All tape measures must have a stopper at the start of the tape in order to prevent the same from entering the casing using the aforementioned spring effect leaving a small section protruding which the user can hold, pull out and take the relevant measurements. This stopper consists of a piece at right angles to the plane containing the strip which also supports it on the end of the object being measured, at point "0" of the measurement to be taken.

Additionally, already known tabs have the capacity of moving longitudinally in a parallel direction to that of the tape, in a length equal to the thickness of the perpendicular section compared to the tape in order to correct the measurement of this thickness as the measurement is taken from the front of this piece of from the opposing part. The tab is normally mounted on the tape using inlaid rivets fixed onto the tape, while the tab moves in a longitudinal direction by holes located around the rivet stems allowing the aforementioned movement.

The advantageous design of the new tab means that the main faults of conventional tabs listed below are overcome:
- The tab is attached onto the surface of the tape, at the start of it, which is the most used area for small measurements, this tab covers the millimetre markings at the start of the tape and it impossible to or at least incorrectly read the measurement in the space occupied by the tab.
- The rivets holding the tab onto the tape are in holes made in the tape with a thickness of 0.1 mm. (which is the approximate thickness of the measuring tape)are very weakly mounted given that they are attached to the end of the same and their use will easily release them from their mounting making the tape unusable and redundant.

The tab described here comprises a single body which is split into two branches which are parallel to each other and separated by sufficient space so that the tape can be slid into them and which, on its end, has a perpendicular section which acts as a stopper when the tape is returning to the case and at times when measurements have to be taken by marking point "0".

The two aforementioned branches have drilled holes to house the fixed rivets passing through both branches which hold the end of the tape by its two faces on the upper section and lower section of the horizontal part of the tab respectively. Therefore, the surface crossed by the rivets, formed by the total of the thicknesses of the two parallel branches and the tape, have a thickness much greater than the tape alone and on the other hand given that the rivets are firmly held on the upper and lower section where its head is located, forming a single body making it practically impossible for it to become separate during use as happens with conventional tabs.

Therefore, because of the innovative configuration of the tab in combination with the tape the tape's durability is considerably improved.

The tab's longitudinal movement is achieved by making the tape's mounting holes through which the rivets pass joining the two parallel parts and forming a single body so that, in the transverse direction, the measurement is almost equal to the body of the rivets and in the longitudinal direction, the same measurement plus the thickness of the vertical section of the end of the tab.

Preferably, the tab's lower branch has a concave surface and a slightly rectangular edge, whereas the upper section has a flat rectangular area which expands according to brackets. As an option, a prismatic shaped support piece with a slightly rectangular base slightly smaller than the aforementioned base piece may be included on the upper branch to increase the surface to be crossed over by the rivets and to act as a support for the rivet heads.

Preferably, the material of the tab, formed by the two parallel parts covering the front and back of the tape and its perpendicular front section is extremely hard, transparent plastic resin so that the numbers and divisions on the tape may be clearly read even though the tab is superimposed onto it.

Other details and characteristics shall be shown throughout the description below referring to drawings attached to this report, diagramatically demonstrating the preferred embodiment of the invention for illustrative purposes but not limiting.

A numerical list of the main parts shown in the attached drawings is given below and detailed in the attached diagrams; (11) tape, (12) tab, (13) end of (11), (14) lower section of (12), (15) upper section of (12), (16) rivets, (17) brackets, (18) base part of (15), (19) vertical part of (12), (20-21) hole, (22) horizontal part of (12), (23) space between (14) and (15), (24) thickness of (19), and (25) support piece of (15).
Figure 1 is a perspective view of the start of the tape (11) on its lower section onto which the tab (12) is held by appropriate means, with the front surface outside the vertical section (19) of the aforementioned tab (12) partially moved some distance (24) from the end (13).
Figure 2 is a perspective view of the start of the tape (11) on its upper section onto which the tab (12) is held by appropriate means, with the front surface outside the vertical section (19) of the aforementioned tab (12) partially moved some distance (24) from the end (13).
Figure 3 is a perspective view of the start of the tape (11) on its upper section onto which the tab (12) is held by appropriate means, with the front surface outside the vertical section (19) of the aforementioned tab (12) butted up to the end (13).
Figure 4 is a top plan view of tab (12).
Figure 5 is a bottom plan view of tab (12).

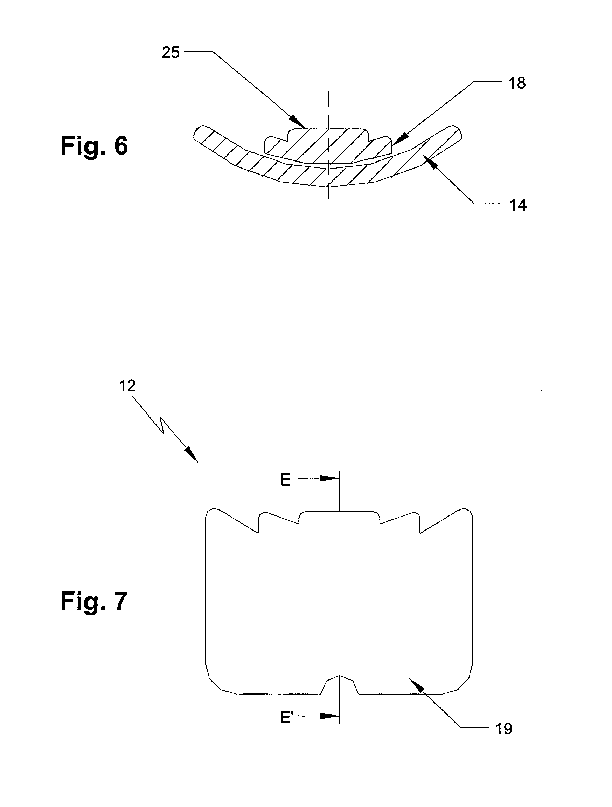

Figure 6 is a cross top section cut G-G', according to Figure 5.
Figure 7 is a front top view of the tab (12) on its vertical section (19).
Figure 8 is a cross section cut E-E' according to figure 7, in which the two lower (14) and upper (15) horizontal sections of the tab (12) shown with the separation between both (23) to include the tape (11) into it, and the vertical section (19).
Figure 9 is a detail of point 1 according to Figure 8, of the tab (12) and its horizontal sections (14-15), and the housing (20) and (21) for the rivets.

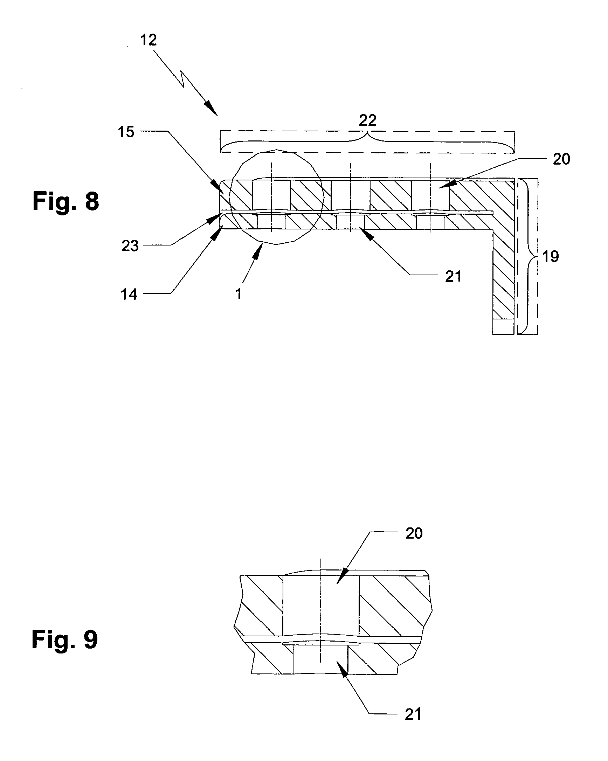

In one of the preferred embodiments which is the purpose of this invention and as shown in figure 8, the tab (12) is formed by a single body with a horizontal section (22) and a vertical section (19). This horizontal section (22) is divided into two wings or parallel of equal length which is known by the lower section (14) and upper section (15) of the tab (12).

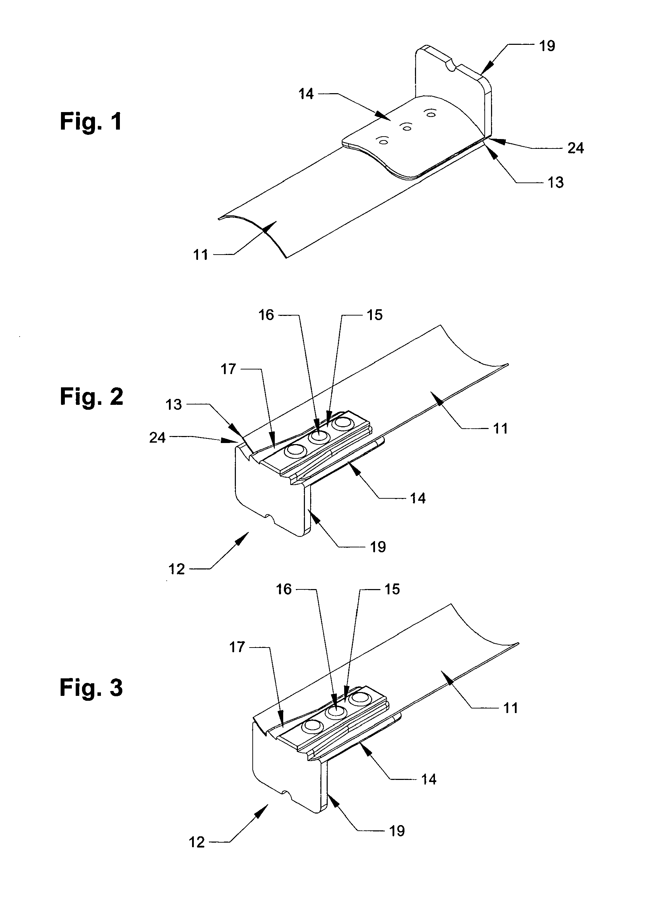

Between the lower section (14) and the upper section (15) of the tab (12) there is a separation strip (23) where the tape (11) is housed the branch or upper section (15) of the tab (12) as shown in figures 2-3 on top of the upper section of the tape (11), and the other branch or lower section (14) of the tab (12) below the lower face of the tab (11).

So that the upper (15) and lower (14) section of the tab (12) exercise sufficient pressure onto the final section of the tape (11) located in the separation (23) to immobilise the same, there are holes (20-21) drilled into both branches (14-15), so that the rivets (16) pass through (14, 11, and 15) these holes and pressing the assembly together. However, as shown in Figures 2-3, the tab (12) has the ability to slide a small distance (24) with regard to the tape (11) because the said tape (11) has mounting holes, not shown in the diagram, allowing the aforementioned movement.

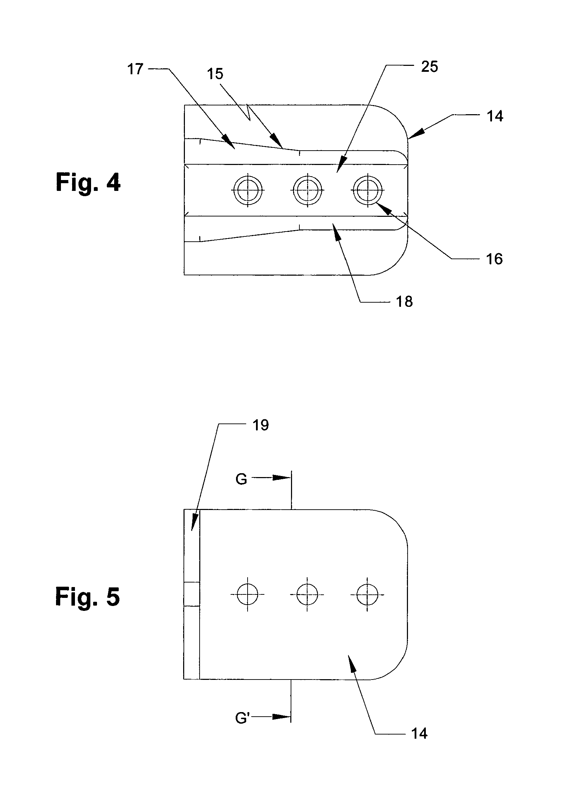

In one of the possible configurations, although not the only one, of the tab (12) is that shown in figure 4, showing its upper horizontal section (15) with a slightly prismatic thin base piece (18) which expands in the area nearest to the vertical section (19) of (12) in the form of brackets (17), to reinforce the body of the tab (12) against unwanted torsion forces causing it to break. On this base piece (18) there is a prismatic, slightly rectangular based support piece (25) slightly smaller than the aforementioned base piece (18), the function of which is to support the rivet heads (16).

In the event that the tab (12) is manufactured in a transparent material reading measurements on the upper section of the tape (11) is completely ensured which is one of the useful features of this invention, making reading small measurements possible where current tape measures find this difficult and sometimes impossible. Moreover, by manufacturing the specified tab in one single piece regardless of the configuration, there is a substantial saving in manufacturing and assembly costs of the tape measure.

Having sufficiently described this invention using the Figures attached, it is easy to understand that any changes judged to be suitable may be made, whenever these changes do not alter of the essence of the invention summarised in the following claims.

## Claims

1. - "IMPROVED TAB FOR A TAPE MEASURE" formed by one piece, comprising a vertical section and a horizontal section with an upper and lower section of a tape and joined to the said tape by rivets or screws on the end of the said tape, **characterised by** the fact that the horizontal section (22) of the tab (12) has a branch or upper section (15) and a branch or lower section (14) with a gap (23) between both into which the end of the tape (11) is placed, so that the end of the tape (11) is covered on its lower and upper face by the two horizontal sections, (14) and (15) respectively.

2. - "IMPROVED TAB FOR A TAPE MEASURE" according to the first Claim, **characterised by** the fact that it is made in transparent plastics or resins.

3. - "IMPROVED TAB FOR A TAPE MEASURE" according to the first Claim, **characterised by** the fact that the upper section (15) and the lower section (14) of the tab (12) have drilled vertical holes (20-21) to pass rivets (16) through passing through the two sections (14-15).

4. - "IMPROVED TAB FOR A TAPE MEASURE" according to the first and third Claim **characterised by** the fact that the lower section (14) of the tab (12) has a concave surface and a slightly rectangular edge, whereas the upper section (15) has a flat rectangular area (18) which expands according to brackets (17).

5. - "IMPROVED TAB FOR A TAPE MEASURE" according to the first, third and fourth Claim, **characterised by** the fact that the upper section (15) has, on top of the flat rectangular piece (18), a prismatic, slightly rectangular support piece (25) slightly smaller than the aforementioned base piece (18).

6. - "IMPROVED TAB FOR A TAPE MEASURE" according to the first Claim, **characterised by** the fact that there are mounting holes in the tape (11) so that the aforementioned tab (12) may move with regard to the tape (11) by a certain distance (24).

7. - "IMPROVED TAB FOR A TAPE MEASURE" according to the first and sixth Claim, **characterised by** the fact that the mounting holes in the tape (11) have in a transverse direction slightly the same measurement as the rivet body (16), and in the longitudinal direction the same measurement plus the thickness of the vertical section (19) of the tab (12).
